# EUROPEAN PATENT APPLICATION

(11) **EP 3 562 234 A1**
(43) Date of publication of application: **30.10.2019**
(21) Application number: 17893094.7
(22) Date of filing: 11.08.2017
(51) Int. Cl.: H04W 72/04

(54) **DATA TRANSMISSION METHOD AND ELECTRONIC TERMINAL**

(30) Priority: 19.01.2017 CN 201710044671
(71) Applicant: Huawei Technologies Co., Ltd., Longgang District Shenzhen, Guangdong 518129 (CN)
(72) Inventor: LI, Guorong, Shenzhen Guangdong 518129 (CN); ZHUANG, Hongcheng, Shenzhen Guangdong 518129 (CN); ZHANG, Lili, Shenzhen Guangdong 518129 (CN); XU, Kai, Shenzhen Guangdong 518129 (CN)
(74) Representative: Pfenning, Meinig & Partner mbB
(86) International application number: PCT/CN2017/097155
(87) International publication number: WO 2018/133398

(57) **Abstract**

Embodiments of the present invention relate to the communications field, and provide a data transmission method and an electronic terminal, where the method is applied to the electronic terminal, so that respective latency requirements of services can be met when the services with different latency requirements are simultaneously implemented. The method is performed by a user terminal, and includes: receiving logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station; determining one or more target logical channels based on the logical channel configuration information; and sending data on the one or more target logical channels to the base station.

## Description

### TECHNICAL FIELD

The present invention relates to the communications field, and in particular, to a data transmission method and an electronic terminal.

### BACKGROUND

In a long term evolution (Long Term Evolution, LTE) network, a radio base station eNodeB allocates an uplink grant (Uplink grant, UL grant) of one type of numerology/transmission time interval (Transmission Time Interval, TTI) length to each user equipment (User Equipment, UE), and the UE can use a resource according to only a logical channel priority. A low-priority logical channel can be served only when data on all high-priority logical channels is sent and the UL grant has not been exhausted yet. In other words, in this case, the UE maximizes data transmission on the high-priority logical channels.

When the UE has both a latency-sensitive service and a latency-insensitive service, the UE needs to differently process the services with different latency requirements, to meet respective latency requirements of the services. However, currently this requirement cannot be met in the prior art.

### SUMMARY

Embodiments of the present invention provide a data transmission method and an electronic terminal, so that services with different latency requirements can be differently processed, to meet respective latency requirements of the services.

To achieve the foregoing objective, the following technical solutions are used in the embodiments of the present invention.

According to a first aspect, a data transmission method is disclosed. The method is applied to an electronic terminal, and includes:
receiving, by the electronic terminal, logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station;
determining, by the electronic terminal, one or more target logical channels based on the logical channel configuration information; and
sending, by the electronic terminal, data on the one or more target logical channels to the base station.

With reference to the first aspect, in a first possible implementation of the first aspect, the logical channel configuration information is at least one of the following parameter information: first parameter information of a logical channel for which the first UL grant is used or second parameter information of a logical channel for which the second UL grant is used; and
the determining one or more target logical channels based on the logical channel configuration information specifically includes:
determining, based on the first UL grant and the first parameter information of the logical channel for which the first UL grant is used from the base station, that the one or more target logical channels are one or more logical channels that meet the first parameter information; or
determining, based on the second UL grant and the second parameter information of the logical channel for which the second UL grant is used from the base station, that the one or more target logical channels are one or more logical channels that meet the second parameter information.

With reference to the first possible implementation of the first aspect, in a second possible implementation of the first aspect, the first parameter information of the logical channel for which the first UL grant is used is at least one of a latency parameter of the logical channel for which the first UL grant is used, a latency threshold of the logical channel for which the first UL grant is used, a type of the logical channel for which the first UL grant is used, a priority of the logical channel for which the first UL grant is used, or a value range of a priority of the logical channel for which the first UL grant is used.

With reference to the first possible implementation of the first aspect, in a third possible implementation of the first aspect, the second parameter information of the logical channel for which the second UL grant is used is at least one of a latency parameter of the logical channel for which the second UL grant is used, a latency threshold of the logical channel for which the second UL grant is used, a type of the logical channel for which the second UL grant is used, a priority of the logical channel for which the second UL grant is used, or a value range of a priority of the logical channel for which the second UL grant is used.

With reference to the second possible implementation of the first aspect, in a fourth possible implementation of the first aspect, the method further includes:
receiving the first UL grant, the second uplink grant UL grant, and the latency parameter of the logical channel for which the first UL grant is used from the base station; determining, based on the received latency parameter of the logical channel for which the first UL grant is used, one or more target logical channels that meet the latency parameter; and sending data on the one or more determined target logical channels to the base station by using a resource of the first UL grant; or
receiving the first UL grant, the second uplink grant UL grant, and the latency threshold of the logical channel for which the first UL grant is used from the base station; determining, based on the latency threshold of the logical channel for which the first UL grant is used, one or more target logical channels that meet the latency threshold; and sending data on the one or more determined target logical channels to the base station by using a resource of the first UL grant; or
receiving the first UL grant, the second uplink grant UL grant, and the type of the logical channel for which the first UL grant is used from the base station; determining, based on the type of the logical channel for which the first UL grant is used, one or more target logical channels that meet the type; and sending data on the one or more determined target logical channels to the base station by using a resource of the first UL grant; or
receiving the first UL grant, the second uplink grant UL grant, and the priority of the logical channel for which the first UL grant is used from the base station; determining, based on the priority of the logical channel for which the first UL grant is used, one or more target logical channels corresponding to the priority; and sending data on the one or more determined target logical channels to the base station by using a resource of the first UL grant; or
receiving the first UL grant, the second uplink grant UL grant, and the value range of the priority of the logical channel for which the first UL grant is used from the base station; determining, based on the value range of the priority of the logical channel for which the first UL grant is used, one or more target logical channels that meet the value range of the priority; and sending data on the one or more determined target logical channels to the base station by using a resource of the first UL grant.

With reference to the third possible implementation of the first aspect, in a fifth possible implementation of the first aspect, the method further includes:
receiving the first UL grant, the second uplink grant UL grant, and the latency parameter of the logical channel for which the second UL grant is used from the base station; determining, based on the latency parameter of the logical channel for which the second UL grant is used, one or more target logical channels that meet the latency parameter; and sending data on the one or more determined target logical channels to the base station by using a resource of the second UL grant; or
receiving the first UL grant, the second uplink grant UL grant, and the latency threshold of the logical channel for which the second UL grant is used from the base station; determining, based on the latency threshold of the logical channel for which the second UL grant is used, one or more target logical channels that meet the latency threshold; and sending data on the one or more determined target logical channels to the base station by using a resource of the second UL grant; or
receiving the first UL grant, the second uplink grant UL grant, and the type of the logical channel for which the second UL grant is used from the base station; determining, based on the type of the logical channel for which the second UL grant is used, one or more target logical channels corresponding to the type; and sending data on the one or more determined target logical channels to the base station by using a resource of the second UL grant; or
receiving the first UL grant, the second uplink grant UL grant, and the priority of the logical channel for which the second UL grant is used from the base station; determining, based on the priority of the logical channel for which the second UL grant is used, one or more target logical channels corresponding to the priority; and sending data on the one or more determined target logical channels to the base station by using a resource of the second UL grant; or
receiving the first UL grant, the second uplink grant UL grant, and the value range of the priority of the logical channel for which the second UL grant is used from the base station; determining, based on the value range of the priority of the logical channel for which the second UL grant is used, one or more target logical channels that meet the value range of the priority; and sending data on the one or more determined target logical channels to the base station by using a resource of the second UL grant.

With reference to the first aspect, in a sixth possible implementation of the first aspect, the logical channel configuration information is carried in at least one of the first UL grant or the second UL grant.

With reference to the sixth possible implementation of the first aspect, in a seventh possible implementation of the first aspect, the logical channel configuration information is at least one of logical channel identification information or logical channel priority information.

With reference to the seventh possible implementation of the first aspect, in an eighth possible implementation of the first aspect, at least one of PRB or MCS information carried in the UL grant indicates at least one of corresponding logical channel identification information or logical channel priority information.

With reference to the seventh possible implementation of the first aspect, in a ninth possible implementation of the first aspect, at least one of a location or a resource of the UL grant indicates at least one of corresponding logical channel identification information or logical channel priority information.

With reference to the first aspect, in a tenth possible implementation of the first aspect, the logical channel configuration information is a numerology parameter of each logical channel.

With reference to the tenth possible implementation of the first aspect, in an eleventh possible implementation of the first aspect, the numerology parameter of the logical channel includes a numerology index or type used for the logical channel and a TTI type used for the logical channel.

According to a second aspect, an electronic terminal is disclosed, and includes a receiving unit, a processing unit, and a sending unit, where
the receiving unit is configured to receive logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station;
the processing unit is configured to determine one or more target logical channels based on the received logical channel configuration information; and
the sending unit is configured to send data on the one or more determined target logical channels to the base station.

With reference to the second aspect, in a first possible implementation of the second aspect, the logical channel configuration information is at least one of the following parameter information: first parameter information of a logical channel for which the first UL grant is used or second parameter information of a logical channel for which the second UL grant is used; and
the processing unit is specifically configured to: determine, based on the first UL grant and the first parameter information of the logical channel for which the first UL grant is used from the base station, that the one or more target logical channels are one or more logical channels that meet the first parameter information; or determine, based on the second UL grant and the second parameter information of the logical channel for which the second UL grant is used from the base station, that the one or more target logical channels are one or more logical channels that meet the second parameter information.

With reference to the first possible implementation of the second aspect, in a second possible implementation of the second aspect, the first parameter information of the logical channel for which the first UL grant is used is at least one of a latency parameter of the logical channel for which the first UL grant is used, a latency threshold of the logical channel for which the first UL grant is used, a type of the logical channel for which the first UL grant is used, a priority of the logical channel for which the first UL grant is used, or a value range of a priority of the logical channel for which the first UL grant is used.

With reference to the first possible implementation of the second aspect, in a third possible implementation of the second aspect, the second parameter information of the logical channel for which the second UL grant is used is at least one of a latency parameter of the logical channel for which the second UL grant is used, a latency threshold of the logical channel for which the second UL grant is used, a type of the logical channel for which the second UL grant is used, a priority of the logical channel for which the second UL grant is used, or a value range of a priority of the logical channel for which the second UL grant is used.

With reference to the second aspect and the first and the second possible implementations of the second aspect, in a fourth possible implementation of the second aspect, the processing unit is specifically configured to determine, based on the received latency parameter of the logical channel for which the first UL grant is used, one or more target logical channels that meet the latency parameter; and the sending unit is specifically configured to send data on the one or more determined target logical channels to the base station by using a resource of the first UL grant; or
the processing unit is specifically configured to determine, based on the received latency threshold of the logical channel for which the first UL grant is used, one or more target logical channels that meet the latency threshold; and the sending unit is specifically configured to send data on the one or more determined target logical channels to the base station by using a resource of the first UL grant; or
the processing unit is specifically configured to determine, based on the received type of the logical channel for which the first UL grant is used, one or more target logical channels that meet the type; and the sending unit is specifically configured to send data on the one or more determined target logical channels to the base station by using a resource of the first UL grant; or
the processing unit is specifically configured to determine, based on the received priority of the logical channel for which the first UL grant is used, one or more target logical channels that meet the priority; and the sending unit is specifically configured to send data on the one or more determined target logical channels to the base station by using a resource of the first UL grant; or
the processing unit is specifically configured to determine, based on the received value range of the priority of the logical channel for which the first UL grant is used, one or more target logical channels that meet the value range of the priority; and the sending unit is specifically configured to send data on the one or more determined target logical channels to the base station by using a resource of the first UL grant.

With reference to the second aspect and the first or the third possible implementation of the second aspect, in a fifth possible implementation of the second aspect, the processing unit is specifically configured to determine, based on the received latency parameter of the logical channel for which the second UL grant is used, one or more target logical channels that meet the latency parameter; and the sending unit is specifically configured to send data on the one or more determined target logical channels to the base station by using a resource of the second UL grant; or
the processing unit is specifically configured to determine, based on the received latency threshold of the logical channel for which the second UL grant is used, one or more target logical channels that meet the latency threshold; and the sending unit is specifically configured to send data on the one or more determined target logical channels to the base station by using a resource of the second UL grant; or
the processing unit is specifically configured to determine, based on the received type of the logical channel for which the second UL grant is used, one or more target logical channels that meet the type; and the sending unit is specifically configured to send data on the one or more determined target logical channels to the base station by using a resource of the second UL grant; or
the processing unit is specifically configured to determine, based on the received priority of the logical channel for which the second UL grant is used, one or more target logical channels that meet the priority; and the sending unit is specifically configured to send data on the one or more determined target logical channels to the base station by using a resource of the second UL grant; or
the processing unit is specifically configured to determine, based on the received value range of the priority of the logical channel for which the second UL grant is used, one or more target logical channels that meet the value range of the priority; and the sending unit is specifically configured to send data on the one or more determined target logical channels to the base station by using a resource of the second UL grant.

With reference to the second aspect, in a sixth possible implementation of the second aspect, the logical channel configuration information is carried in at least one of the first UL grant or the second UL grant.

With reference to the sixth possible implementation of the second aspect, in a seventh possible implementation of the second aspect, the logical channel configuration information is at least one of logical channel identification information or logical channel priority information.

With reference to the seventh possible implementation of the second aspect, in an eighth possible implementation of the second aspect, at least one of PRB or MCS information carried in the UL grant indicates at least one of corresponding logical channel identification information or logical channel priority information.

With reference to the eighth possible implementation of the second aspect, in a ninth possible implementation of the second aspect, at least one of a location or a resource of the UL grant indicates at least one of corresponding logical channel identification information or logical channel priority information.

With reference to the second aspect, in a tenth possible implementation of the second aspect, the logical channel configuration information is a numerology parameter of each logical channel.

With reference to the tenth possible implementation of the second aspect, in an eleventh possible implementation of the second aspect, the numerology parameter of the logical channel includes a numerology index or type used for the logical channel and a TTI type used for the logical channel.

According to a third aspect, an electronic terminal is disclosed, and includes one or more memories and one or more processors, where the memory is configured to store one or more programs; and the processor is configured to: when executing the one or more programs stored in the memory, enable the electronic terminal to perform the foregoing method.

According to a fourth aspect, a computer readable storage medium is disclosed, and includes an instruction, where when the instruction runs on an electronic terminal, the electronic terminal is enabled to perform the foregoing method.

According to a fifth aspect, a computer program product is disclosed, where when the computer program product is executed on an electronic terminal, the electronic terminal is enabled to perform the foregoing method.

According to the data transmission method and the terminal that are provided in the present invention, UE selects corresponding logical channels for resources of different TTI lengths or numerologies, so that services with different latency requirements can be differentially processed, to better meet different latency requirements of a user for various services.

### DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may further derive other drawings from these accompanying drawings without creative efforts.
FIG. 1 is a schematic flowchart of existing logical channel prioritization in LTE;
FIG. 2 is a schematic diagram of a TTI length according to an embodiment of the present invention;
FIG. 3 is a schematic diagram of a network architecture to which an embodiment of the present invention is applied;
FIG. 4 is a schematic diagram of networking to which an embodiment of the present invention is applied;
FIG. 5 is a schematic structural diagram of a terminal according to an embodiment of the present invention;
FIG. 6 is a schematic flowchart according to Embodiment 1 of the present invention;
FIG. 7 is a schematic flowchart according to Embodiment 1 of the present invention;
FIG. 8 is a schematic flowchart according to Embodiment 1 of the present invention;
FIG. 9 is a schematic flowchart according to Embodiment 2 of the present invention;
FIG. 10 is a schematic flowchart according to Embodiment 3 of the present invention;
FIG. 11 is a schematic flowchart according to Embodiment 3 of the present invention;
FIG. 12 is a schematic structural diagram according to Embodiment 4 of the present invention; and
FIG. 13 is a schematic structural diagram according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An existing logical channel prioritization (LCP) process in LTE is as follows: In LTE, a radio base station eNodeB allocates an uplink radio resource based on each UE, and the UE determines a specific logical channel whose data can be placed in the allocated radio resource for transmission. Based on the uplink radio resource allocated by using an uplink grant (UL grant) from the eNodeB, the UE needs to determine a total amount of data that is on each logical channel and that is to be included in a new MAC PDU. In other words, the eNodeB allocates a determined uplink resource to specific UE by using the UL grant, and the UE determines, based on a configuration given in RRC signaling and a rule stipulated in a protocol, a specific logical channel whose data is to be placed and an amount of to-be-placed data on each logical channel.

There is only one MAC PDU, but a plurality of logical channels need multiplexing. Therefore, each logical channel needs to be allocated one priority. Data on a logical channel of a highest priority is preferentially included in the MAC PDU, then data on a logical channel of a second highest priority is included in the MAC PDU, and by analogy, until the allocated MAC PDU is full or no more data needs to be sent. The priority of each logical channel is determined based on a priority field configured in the RRC signaling, and a smaller value indicates a higher priority. In this allocation manner, a high-priority logical channel may always occupy the radio resource allocated by the eNodeB to the UE, causing a low-priority logical channel to be "starved". To avoid this case, a concept of a prioritized bit rate (Prioritised Bit Rate, PBR) is introduced in LTE. To be specific, a data rate of each logical channel is configured before a resource is allocated to the logical channel, to guarantee a minimum data rate of each logical channel, thereby preventing the low-priority logical channel from being "starved". The PBR is determined based on a prioritisedBitRate field configured in the RRC signaling. At a MAC layer, MAC multiplexing is implemented by using an algorithm similar to a token bucket. A basic idea of the algorithm is determining, based on whether there is a token in the token bucket and a quantity of tokens, whether to send data on a specific logical channel and control an amount of data that is on the logical channel and that is to be assembled in the MAC PDU.

The UE maintains a variable Bj for each logical channel j. The variable indicates a quantity of currently available tokens in the token bucket, and each token is corresponding to data of 1 Byte. Bj is initialized to 0 when the logical channel is established, and is increased by PBR×TTI in each TTI. A value of Bj cannot exceed a maximum capacity of the bucket.

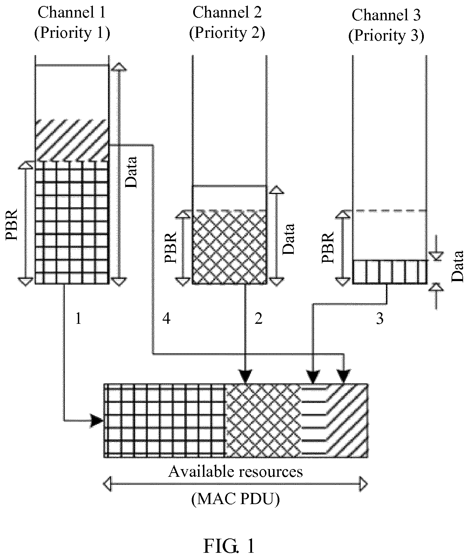

The LCP process is shown in FIG. 1. When there is new to-be-transmitted data, the UE performs the LCP process in the following steps.

Step 1: Perform packet assembly on all logical channels whose Bj>0 in descending order of priorities. A radio resource allocated to each logical channel can meet only a requirement of a PBR. When a PBR of a specific logical channel is configured as infinity ("infinity"), a logical channel whose priority is lower than that of the logical channel is considered only after a resource for the logical channel is met. Step 2: Subtract, from Bj, a size of all MAC SDUs (service data unit) that are of a logical channel j and that are multiplexed into a MAC PDU in step 1. Step 3: If there are remaining uplink resources after the foregoing two steps are performed, allocate the remaining resources to each logical channel based on a logical channel priority regardless of a value of Bj. A low-priority logical channel can be served only when data on all high-priority logical channels is sent and the UL grant has not been exhausted yet. In other words, in this case, the UE maximizes data transmission on the high-priority logical channels. In this implementation solution, the UE receives only an uplink grant (UL grant) of one type of numerology/TTI length, and the UE performs the foregoing described LCP process in consideration of all configured logical channels, to form the MAC PDU. In this technology, different numerology/TTI types are not considered, and consequently different processing of a latency-sensitive service and a latency-insensitive service is not considered.

Currently, there is an increasingly high requirement for a network transmission latency. Many existing applications such as a TCP-based application, a game, a real-time application of VoLTE/VoIP (Voice over LTE/voice over IP), and a video call/conference may benefit from a reduced latency, so that user experience can be enhanced. In addition, some new application scenarios or applications such as automotive remote control/driving, an augmented reality application (for example, smart glasses), or specific machine communication and emergency communication that require a low latency have a higher latency requirement. Currently, a standard transmission time interval TTI is of a fixed length - 1 ms, to be specific, request, grant, or data transmission is performed in one subframe with a fixed length (1 ms). This is a source of a latency in exchanging each packet between UE and an eNodeB.

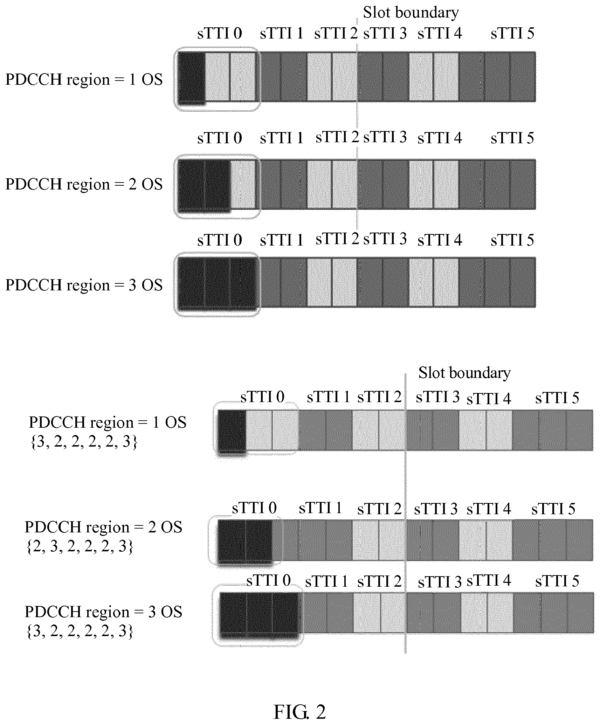

To reduce a latency, a current research direction is providing a short TTI length. Each TTI length may be configured by using radio resource control (Radio Resource Control, RRC) signaling, and the TTI length may be shortened to a level of two symbols or three symbols, as shown in FIG. 2. In uplink data transmission, a short TTI grant (short TTI grant) is mainly used to serve a latency-sensitive service, and a grant of a standard-length TTI may be used for a common latency-insensitive service.

One UE may support a plurality of types of numerologies from a single cell. One radio bearer may be configured in a network to map to one or more numerologies/TTI lengths. The eNodeB controls the UE to map a specific logical channel to a specific numerology and/or TTI. The embodiments of the present invention focus on how the UE differently processes services with different latency requirements to meet respective latency requirements of the services when the UE has both a latency-sensitive service and a latency-insensitive service. When the UE receives uplink grants of different TTI lengths and/or numerologies, the UE may map different logical channels to the different numerologies/TTI lengths, in other words, select logical channels for the different numerologies/TTI lengths, and then perform a logical channel prioritization (Logical Channel Prioritization, LCP) process, to transmit data of each service by using a logical channel suitable for a latency of each service, so that a latency-sensitive service is transmitted as soon as possible. Specifically, logical channel selection or mapping may be implemented by imposing a limitation that a latency-insensitive data packet is not sent in a short TTI and a latency-sensitive data packet is not sent in a 1 ms TTI, to meet latency requirements. Alternatively, a latency is considered in the LCP process.

The embodiments of the present invention provide signaling methods that meet the foregoing requirement. These methods may be not only used for a short TTI feature in LTE, but also used to support different numerologies/services that are being discussed in 5G NR.

During uplink transmission, the UE may simultaneously implement a latency-sensitive service and a latency-insensitive service. In conventional uplink scheduling, a 1 ms TTI is used to serve a latency-insensitive service; and in short TTI uplink scheduling, a TTI with a length of two or three symbols is used to serve a latency-sensitive service. Therefore, the eNB may configure both the 1 ms TTI and the short TTI for the UE, to transmit these services. The conventional 1 ms TTI and the short TTI may appear in one subframe or different subframes.

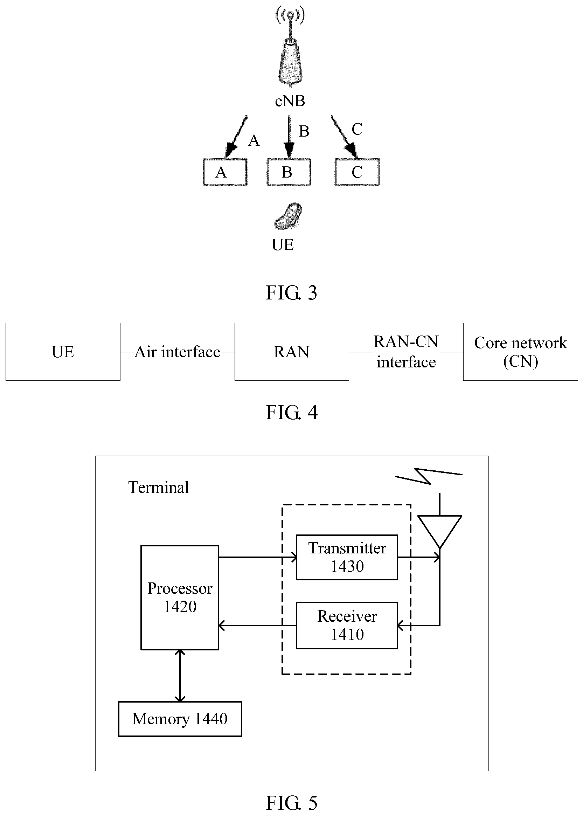

A system architecture is shown in FIG. 3. A base station in LTE or 5G communicates with UE by using a radio interface, and A, B, and C respectively indicate three different system parameter configurations (numerology) or TTI lengths (a 1 ms TTI or a short TTI). FIG. 3 mainly shows downlink direction communication. In actual deployment, there may be bidirectional communication (including both uplink direction communication and downlink direction communication). When the UE needs to send uplink data, the UE sends a buffer status report (Buffer Status Report, BSR) to the eNB, to indicate a buffer status of a corresponding logical channel (group) of the UE. Then, the eNB schedules an uplink resource of a 1 ms TTI and/or an uplink resource of a short TTI for the UE. When the UE receives a 1 ms UL grant or a short TTI UL grant, the UE performs an LCP process to multiplex data on a plurality of logical channels into one MAC PDU, and sends the MAC PDU by using a resource corresponding to the UL grant.

Network elements used in the solutions in the present invention may include a terminal: UE or a 5G terminal; a radio access network (Radio Access Network, RAN): an LTE eNB/HeNB/Relay/Femto/Pico, or a 5G base station; and a core network (Core Network, CN): an LTE core network or a 5G core network. A connection relationship is shown in FIG. 4. Physical components of the terminal include physical components such as a processor 1420, a memory 1440, a transmitter 1430, a receiver 1410, and an antenna, as shown in FIG. 5.

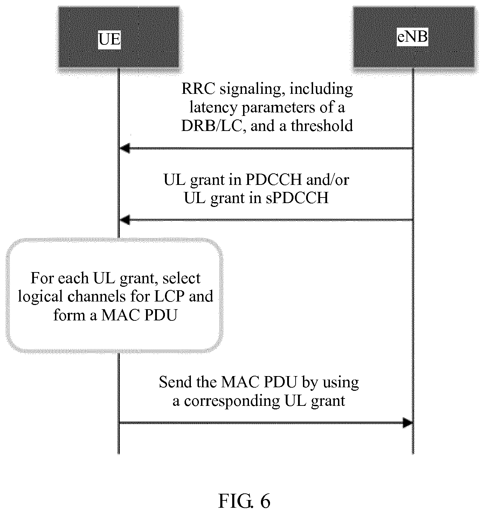

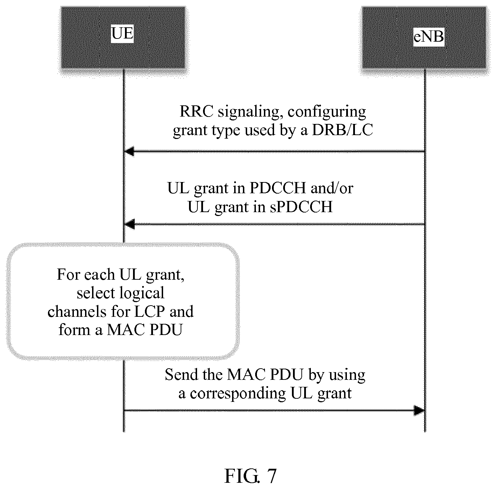

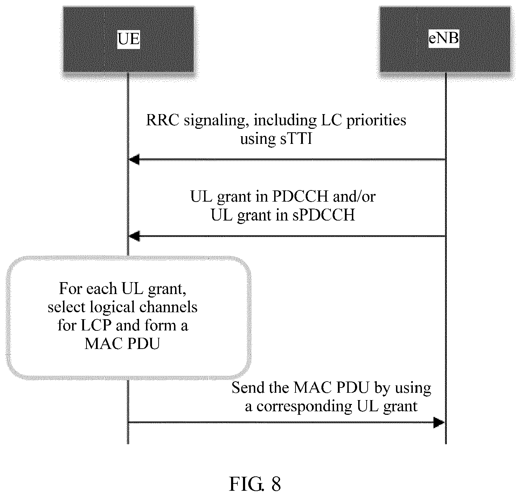

The following embodiments describe how to select a logical channel mainly for the short TTI feature in LTE.
Embodiment 1: An eNB notifies UE of information related to logical channel selection in higher-layer signaling, for example, by using RRC signaling. Specifically, the following different methods may be included:
Method 1.1: As shown in FIG. 6, the eNB notifies the UE of a latency parameter of a data radio bearer (Data radio bearer, DRB)/logical channel LC and an optional threshold 1.
   When performing scheduling for uplink transmission of the UE, the eNB sends a physical downlink control channel (Physical Downlink Control Channel, PDCCH) and/or a short TTI PDCCH (Short TTI Physical Downlink Control Channel, sPDCCH) that include/includes UL grants/a UL grant. A UL grant included in the PDCCH is a UL grant of a 1 ms TTI, and a UL grant included in the sPDCCH is a UL grant of a short TTI.
   After receiving the UL grant, the UE determines specific logical channels that are to be selected for the UL grant of the 1 ms TTI and the UL grant of the short TTI to perform an LCP process. For example, any UL grant, namely, both the short TTI grant and the 1 ms TTI grant, can be used for a logical channel whose latency is lower than the configured threshold 1, and only the UL grant of the 1 ms TTI can be used for a logical channel whose latency is higher than the configured threshold 1. If the eNB does not configure the threshold 1, the UE may set the threshold based on an implementation of the UE.
   The latency parameter configured by the eNB may be a latency required by quality of service (Quality of Service, QoS) or an index/pointer to a latency required by service QoS. The UE determines, based on the latency parameter required by the service QoS from the eNB, that only a UL grant of a first TTI length from the eNB can be used for a logical channel whose latency parameter is higher than a preset threshold, or that a UL grant of a second TTI length from the eNB is used for a logical channel whose latency parameter is lower than a preset threshold. Specifically, the UE may determine, based on the latency parameter and the threshold from the eNB, logical channels respectively corresponding to the UL grant of the first TTI length and the UL grant of the second TTI length from the eNB, or the UE may determine, based on the latency parameter from the eNB and a threshold determined by the UE, logical channels respectively corresponding to the UL grant of the first TTI length and the UL grant of the second TTI length from the eNB, to perform an LCP process, and multiplex data on the plurality of determined logical channels into one media access control protocol data unit MAC PDU (Media Access Control Protocol Data Unit). For the LCP process, the UE may perform legacy LCP (legacy LCP), or the UE may preferentially transmit data on a logical channel with a lower latency.
Method 1.2: The eNB notifies the UE of a configuration that one of the following configurations is used for a DRB/logical channel, and the UE complies with the configuration of the eNB when selecting a logical channel:
   Only a UL grant of a short TTI is used; or either a UL grant of a short TTI or a UL grant of a 1 ms TTI may be used; or only a UL grant of a 1 ms TTI is used.
   As shown in FIG. 7, when performing scheduling for uplink transmission of the UE, the eNB sends a PDCCH and/or an sPDCCH (a short TTI PDCCH) that carry/carries UL grants/a UL grant. The UE determines, based on a type of a logical channel for which only a first TTI length is used from the eNB, that only a UL grant of the first TTI length is used for a logical channel that meets the type, or determines, based on a type of a logical channel for which only a second TTI length is used from the eNB, that only a UL grant of the second TTI length is used for a logical channel that meets the type.
   The UE determines, based on a type of a logical channel for which a first TTI length or a second TTI length can be used from the eNB, that a UL grant of one of the first TTI length and the second TTI length is used for a logical channel that meets the type. When receiving a UL grant (namely, the UL grant of the 1 ms TTI) carried in the PDCCH, the UE selects a logical channel for which the UL grant of the 1 ms TTI can be used, to perform an LCP process.
   When receiving a UL grant (namely, the UL grant of the short TTI) carried in the sPDCCH, the UE selects a logical channel for which the UL grant of the short TTI can be used, to perform an LCP process.
   When receiving the UL grant of the 1 ms TTI/sPDCCH, the UE selects, based on the foregoing configuration, a logical channel for which the UL grant of the 1 ms TTI/sPDCCH can be used, to perform an LCP process.
Method 1.3: As shown in FIG. 8, the eNB configures a specific priority that is corresponding to a logical channel for which a UL grant of a short TTI can be used, and the eNB may further indicate a value of the priority or a value range of the priority.
   For example, the eNB configures four logical channels for the UE, and priorities of the logical channels are respectively 1 to 4. In addition, if the eNB gives a configuration that logical channels whose priorities are 1 and 2 can use the UL grant of the short TTI, only a UL grant of a 1 ms TTI can be used for logical channels of the other priorities.
   When performing scheduling for uplink transmission of the UE, the eNB sends a PDCCH and/or an sPDCCH (a short TTI PDCCH) that carry/carries UL grants/a UL grant. When receiving a UL grant (namely, the UL grant of the short TTI) carried in the sPDCCH, the UE selects only a logical channel of a corresponding priority (for example, the priority 1 or 2), to perform an LCP process. When receiving a UL grant (namely, the UL grant of the 1 ms TTI) carried in the PDCCH, the UE may select the logical channels of the priorities 1 to 4, to perform an LCP process. A procedure is shown in the following figure. The UE determines, based on priority information of a logical channel for which only a first TTI length is used from the eNB, that only a UL grant of the first TTI length is used for a logical channel that meets the priority information, or determines, based on priority information of a logical channel for which only a second TTI length is used from the eNB, that only a UL grant of the second TTI length is used for a logical channel that meets the priority information.
   In Embodiment 1, the eNB configures the information about logical channel selection for UL grants of different numerologies/TTI lengths for the UE by using the higher-layer signaling (for example, the RRC signaling). This is characterized by semi-static configuration. Therefore, the UE can select corresponding logical channels for the different numerologies/TTI lengths, and determine specific to-be-transmitted services, so that service latency requirements can be better met.

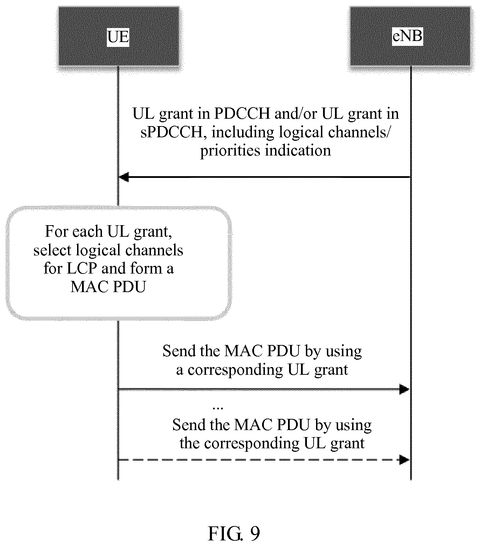

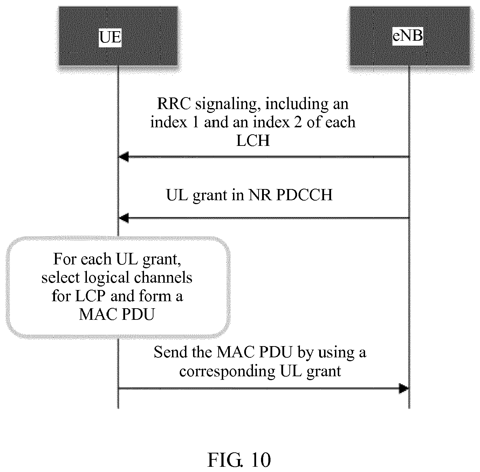

Embodiment 2: Logical channel configuration information is carried in the UL grant. As shown in FIG. 9, a UL grant (namely, a UL grant of a short TTI) in an sPDCCH or a grant (namely, a UL grant of a 1 ms TTI) in a PDCCH indicates a logical channel for which the UL grant can be used/priority information.
The logical channel/priority information may be indicated in each UL grant of the short TTI or the 1 ms TTI. Alternatively, to reduce physical layer signaling overheads, the logical channel/priority information may be indicated in a first UL grant of the short TTI or the 1 ms TTI, and subsequently the logical channel/priority information does not appear in the UL grant if the logical channel/priority information remains unchanged. The logical channel/priority information may be indicated in the UL grant by using the following methods:
Method A: The logical channel/priority information, for example, a logical channel/priority index or identifier, may be included in the UL grant. Method B: A PRB, an MCS, or the like carried in the UL grant may be mapped to a corresponding logical channel/priority. For example, the eNB configures or pre-configures a mapping relationship between a PRB or an MCS and a logical channel/priority for the UE. When receiving the UL grant in the sPDCCH or the PDCCH, the UE selects, based on a PRB or an MCS included in the UL grant and the mapping relationship, a logical channel corresponding to the UL grant, to perform an LCP process. Method C: A location/resource of the UL grant may be mapped to a corresponding logical channel/priority. For example, the eNB configures or pre-configures a mapping relationship between a UL grant location/resource and a logical channel/priority for the UE. When receiving the UL grant in the sPDCCH or the PDCCH, the UE selects, based on a UL grant location/resource in the UL grant and the mapping relationship, a logical channel corresponding to the UL grant, to perform an LCP process.
A difference between Embodiment 2 and Embodiment 1 is that because the sPDCCH is sent more dynamically than the RRC signaling, in Embodiment 2, the eNB may flexibly and rapidly schedule, based on a real-time uplink buffer status of the UE, the UE to send services on different logical channels. In Embodiment 2, the UL grant is used to indicate the corresponding logical channel/priority information. This is more dynamic, so that the eNB flexibly schedules, based on a scheduling decision, the UE to send uplink service data, to ensure a service latency requirement. In method C, control signaling overheads of the physical layer sPDCCH/PDCCH are reduced.
Embodiment 3: Embodiment 3 is mainly for 5G NR (New Radio). In NR, both an eNB and UE support a plurality of types of system configuration parameters (numerology) in a same cell. One type of numerology may include a plurality of types of TTI lengths. In the solution of this embodiment, the eNB configures a numerology parameter of each logical channel for the UE, for example, by using higher-layer RRC signaling. For the numerology parameter, there may be the following two manners:
Manner 3.1: As shown in FIG. 10, numerology parameters at a plurality of levels (layers) respectively indicate numerologies and TTI types in the numerologies. A first level indicates a numerology index or type used for the logical channel. For example, an index 1 is defined in the following table:

| Index 1 | Numerology |
|---|---|
| 0 | eMBB |
| 1 | URLLC |
| 2 | mMTC |

A second level indicates a TTI type used for the logical channel, for example, a short TTI/mini slot grant or a normal TTI. For example, an index 2 is defined in the following table:

| Index 2 | TTI length |
|---|---|
| 0 | Short TTI/mini slot |
| 1 | Normal TTI |

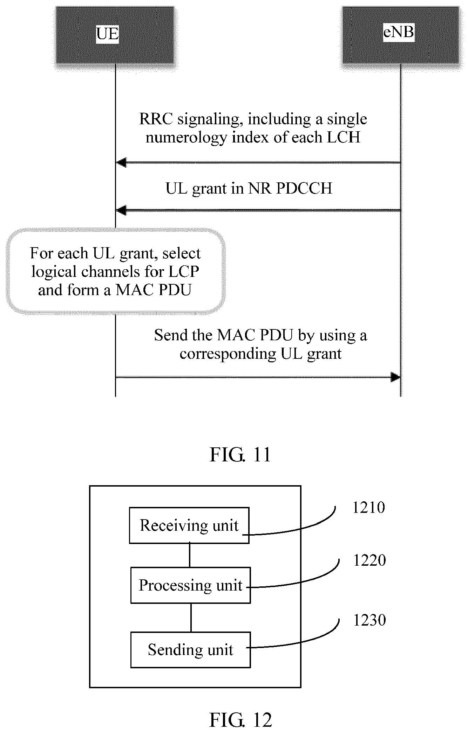

Definitions of the indices at the foregoing two levels may be configured by a gNB (a 5G base station), or predefined/preconfigured in a protocol.
When the UE receives a UL grant, the UE determines a numerology/TTI length type corresponding to the UL grant, and then selects a corresponding logical channel based on the foregoing configuration, to perform an LCP process.
Manner 3.2: As shown in FIG. 11, a single-level numerology parameter, for example, a single index, is used to indicate a numerology and a TTI type. For example, the numerology and the TTI type may be indicated according to the following table.

| Index | Numerology and TTI length |
|---|---|
| 0 | eMBB and normal TTI |
| 1 | eMBB and short TTI |
| 2 | URLLC and short TTI |
| 3 | mMTC and short TTI |
| 4 | mMTC and normal TTI |
| ··· | ··· |

A definition of the index may be configured by a gNB (a 5G base station), or predefined/preconfigured in a protocol.
In Embodiment 3, a layered or single-layer notification method is provided for the feature that one type of numerology may include a plurality of types of TTI lengths in NR, to select suitable logical channels for UL grants of different TTI lengths in different numerologies. A difference between Embodiment 3 and the prior art is that a plurality of types of numerologies in NR and a plurality of types of TTI lengths in each type of numerology are considered, so that a latency requirement of a latency-sensitive service can be better met.
The solutions provided in the embodiments of the present invention can better guarantee QoS of a latency-sensitive service, to be specific, uplink grants of most matched TTI lengths/numerologies are used for logical channels of different services for transmission. This reduces a latency, improves communication quality, and meets a requirement of a user for a high-latency application.
Embodiment 4:
This embodiment of the present invention provides an electronic terminal, and the electronic terminal is configured to implement the solutions described in the foregoing three embodiments. As shown in FIG. 12, the electronic terminal includes a receiving unit 1210, a processing unit 1220, and a sending unit 1230.

The receiving unit is configured to receive logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station.

The processing unit is configured to determine one or more target logical channels based on the received logical channel configuration information.

The sending unit is configured to send data on the one or more determined target logical channels to the base station.

The logical channel configuration information is at least one of the following parameter information: first parameter information of a logical channel for which the first UL grant is used or second parameter information of a logical channel for which the second UL grant is used.

The processing unit is specifically configured to: determine, based on the first UL grant and the first parameter information of the logical channel for which the first UL grant is used from the base station, that the one or more target logical channels are one or more logical channels that meet the first parameter information; or determine, based on the second UL grant and the second parameter information of the logical channel for which the second UL grant is used from the base station, that the one or more target logical channels are one or more logical channels that meet the second parameter information.

The first parameter information of the logical channel for which the first UL grant is used is at least one of a latency parameter of the logical channel for which the first UL grant is used, a latency threshold of the logical channel for which the first UL grant is used, a type of the logical channel for which the first UL grant is used, a priority of the logical channel for which the first UL grant is used, or a value range of a priority of the logical channel for which the first UL grant is used.

The second parameter information of the logical channel for which the second UL grant is used is at least one of a latency parameter of the logical channel for which the second UL grant is used, a latency threshold of the logical channel for which the second UL grant is used, a type of the logical channel for which the second UL grant is used, a priority of the logical channel for which the second UL grant is used, or a value range of a priority of the logical channel for which the second UL grant is used.

The processing unit is specifically configured to determine, based on the received latency parameter of the logical channel for which the first UL grant is used, one or more target logical channels that meet the latency parameter; and the sending unit is specifically configured to send data on the one or more determined target logical channels to the base station by using a resource of the first UL grant; or
the processing unit is specifically configured to determine, based on the received latency threshold of the logical channel for which the first UL grant is used, one or more target logical channels that meet the latency threshold; and the sending unit is specifically configured to send data on the one or more determined target logical channels to the base station by using a resource of the first UL grant; or
the processing unit is specifically configured to determine, based on the received type of the logical channel for which the first UL grant is used, one or more target logical channels that meet the type; and the sending unit is specifically configured to send data on the one or more determined target logical channels to the base station by using a resource of the first UL grant; or
the processing unit is specifically configured to determine, based on the received priority of the logical channel for which the first UL grant is used, one or more target logical channels that meet the priority; and the sending unit is specifically configured to send data on the one or more determined target logical channels to the base station by using a resource of the first UL grant; or
the processing unit is specifically configured to determine, based on the received value range of the priority of the logical channel for which the first UL grant is used, one or more target logical channels that meet the value range of the priority; and the sending unit is specifically configured to send data on the one or more determined target logical channels to the base station by using a resource of the first UL grant.

The processing unit is specifically configured to determine, based on the received latency parameter of the logical channel for which the second UL grant is used, one or more target logical channels that meet the latency parameter; and the sending unit is specifically configured to send data on the one or more determined target logical channels to the base station by using a resource of the second UL grant; or
the processing unit is specifically configured to determine, based on the received latency threshold of the logical channel for which the second UL grant is used, one or more target logical channels that meet the latency threshold; and the sending unit is specifically configured to send data on the one or more determined target logical channels to the base station by using a resource of the second UL grant; or
the processing unit is specifically configured to determine, based on the received type of the logical channel for which the second UL grant is used, one or more target logical channels that meet the type; and the sending unit is specifically configured to send data on the one or more determined target logical channels to the base station by using a resource of the second UL grant; or
the processing unit is specifically configured to determine, based on the received priority of the logical channel for which the second UL grant is used, one or more target logical channels that meet the priority; and the sending unit is specifically configured to send data on the one or more determined target logical channels to the base station by using a resource of the second UL grant; or
the processing unit is specifically configured to determine, based on the received value range of the priority of the logical channel for which the second UL grant is used, one or more target logical channels that meet the value range of the priority; and the sending unit is specifically configured to send data on the one or more determined target logical channels to the base station by using a resource of the second UL grant.

The logical channel configuration information is carried in at least one of the first UL grant or the second UL grant.

At least one of PRB or MCS information carried in the UL grant indicates at least one of corresponding logical channel identification information or logical channel priority information.

At least one of a location or a resource of the UL grant indicates at least one of corresponding logical channel identification information or logical channel priority information.

The logical channel configuration information is a numerology parameter of each logical channel.

The numerology parameter of the logical channel includes a numerology index or type used for the logical channel and a TTI type used for the logical channel.

### Embodiment 5:

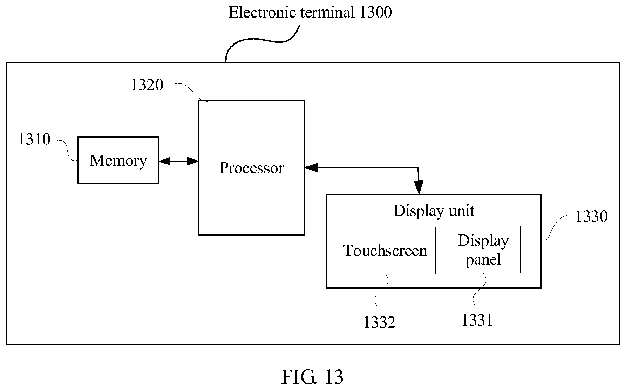

This embodiment of the present invention provides an electronic terminal. As shown in FIG. 13, the electronic terminal 1300 includes one or more memories 1310 and one or more processors 1320. The one or more memories are configured to store one or more programs. The processor is configured to: when executing the one or more programs stored in the memory, enable the electronic terminal to perform the actions performed by the UE in any one of the solutions in Embodiment 1 to Embodiment 3.

The mobile terminal may be a terminal device such as a mobile phone, a tablet computer, a notebook computer, a UMPC (Ultra-mobile Personal Computer, ultra-mobile personal computer), a netbook, or a PDA (Personal Digital Assistant, personal digital assistant).

As shown in FIG. 13, the terminal 1300 includes the memory 1310 and the processor 1320, and may further include a display unit 1330. A person skilled in the art may understand that the structure of the electronic terminal shown in FIG. 13 constitutes no limitation on the electronic terminal, and the electronic terminal may include more or fewer components than those shown in the figure, may combine some components, or have different component arrangements.

The components of the electronic terminal 1300 are described below in detail with reference to FIG. 13.

The memory 1310 may be configured to store a software program and a module. The processor 1310 performs various function applications of the electronic terminal 1300 and data processing by running the software program and the module that are stored in the memory 1320. The memory 1320 may mainly include a program storage area and a data storage area. The program storage area may store an operating system, an application required by at least one function (such as a sound play function and an image play function), and the like. The data storage area may store data (such as audio data, image data, and a phone book) created based on use of the electronic terminal 1300, and the like. In addition, the memory 1320 may include a high-speed random access memory, and may further include a nonvolatile memory, for example, at least one magnetic disk storage device, a flash storage device, or another volatile solid-state storage device.

The display unit 1330 may be configured to display information entered by a user or information provided for a user and various menus of the electronic terminal 1300. The display unit 1330 may include a display panel 1331. Optionally, the display panel 4021 may be configured in a form of an LCD (Liquid Crystal Display, liquid crystal display), an OLED (Organic Light-Emitting Diode, organic light-emitting diode), or the like. Further, a touchscreen 1332 may cover the display panel 1331. After detecting a touch operation performed on or near the touchscreen 1332, the touchscreen 1332 sends the touch operation to the processor 1320 to determine a type of a touch event, and then the processor 1320 provides corresponding visual output on the display panel 1331 based on the type of the touch event. In FIG. 13, the touchscreen 1332 and the display panel 1331 are used as two independent components to implement input and output functions of the terminal. However, in some embodiments, the touchscreen 1332 and the display panel 1331 may be integrated to implement the input and output functions of the electronic terminal 1300.

The processor 1320 is a control center of the electronic terminal 1300, is connected to all parts of the entire mobile phone by using various interfaces and lines, and performs various functions of the electronic terminal 1300 and data processing by running or executing the software program and/or the module that are/is stored in the memory 1310 and by invoking data stored in the memory 1310, to perform overall monitoring on the mobile phone. Optionally, the processor 1320 may include one or more processing units. Preferably, an application processor and a modem processor may be integrated into the processor 1320. The application processor mainly processes an operating system, a user interface, an application program, and the like. The modem processor mainly processes wireless communication. It may be understood that the modem processor may alternatively not be integrated into the processor 1320.

The electronic terminal may be a mobile electronic terminal, or may be a fixed electronic terminal. The mobile electronic terminal may be a mobile phone, a tablet computer, or the like.

The electronic terminal provided in the present invention can better guarantee QoS of a latency-sensitive service, to be specific, uplink grants of most matched TTI lengths/numerologies are used for logical channels of different services for transmission. This reduces a latency, improves communication quality, and meets a requirement of a user for a high-latency application.

An embodiment of the present invention further provides a computer readable storage medium, including an instruction. When the instruction runs on an electronic terminal, the electronic terminal is enabled to perform any one of the solutions in Embodiment 1 to Embodiment 3.

An embodiment of the present invention further provides a computer program product. When the computer program product is executed on an electronic terminal, the electronic terminal is enabled to perform any one of the solutions in Embodiment 1 to Embodiment 3.

An embodiment of the present invention further provides a network device, including a wireless communications interface configured to wirelessly communicate with a terminal device, one or more memories, and one or more processors. The one or more memories are configured to store one or more programs. The processor is configured to: when executing the one or more programs stored in the memory, enable the network device to perform the actions performed by the eNB in any one of the solutions in Embodiment 1 to Embodiment 3.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method is applied to an electronic terminal, and comprises:
receiving logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station;
determining one or more target logical channels based on the logical channel configuration information; and
sending data carried on the one or more target logical channels to the base station.

2. The data transmission method according to claim 1, wherein
the logical channel configuration information is at least one of the following parameter information: first parameter information of a logical channel for which the first UL grant is used or second parameter information of a logical channel for which the second UL grant is used; and
the determining one or more target logical channels based on the logical channel configuration information specifically comprises:
determining, based on the first UL grant and the first parameter information of the logical channel for which the first UL grant is used from the base station, that the one or more target logical channels are one or more logical channels that match the first parameter information; or
determining, based on the second UL grant and the second parameter information of the logical channel for which the second UL grant is used from the base station, that the one or more target logical channels are one or more logical channels that meet the second parameter information.

3. The data transmission method according to claim 2, wherein
the first parameter information of the logical channel for which the first UL grant is used is at least one of a latency parameter of the logical channel for which the first UL grant is used, a latency threshold of the logical channel for which the first UL grant is used, a type of the logical channel for which the first UL grant is used, a priority of the logical channel for which the first UL grant is used, or a value range of a priority of the logical channel for which the first UL grant is used.

4. The data transmission method according to claim 2, wherein
the second parameter information of the logical channel for which the second UL grant is used is at least one of a latency parameter of the logical channel for which the second UL grant is used, a latency threshold of the logical channel for which the second UL grant is used, a type of the logical channel for which the second UL grant is used, a priority of the logical channel for which the second UL grant is used, or a value range of a priority of the logical channel for which the second UL grant is used.

5. The data transmission method according to claim 3, further comprising:
receiving the first UL grant, the second uplink grant UL grant, and the latency parameter of the logical channel for which the first UL grant is used from the base station; determining, based on the received latency parameter of the logical channel for which the first UL grant is used, one or more target logical channels that meet the latency parameter; and sending data on the one or more determined target logical channels to the base station by using a resource of the first UL grant; or
receiving the first UL grant, the second uplink grant UL grant, and the latency threshold of the logical channel for which the first UL grant is used from the base station; determining, based on the latency threshold of the logical channel for which the first UL grant is used, one or more target logical channels that meet the latency threshold; and sending data on the one or more determined target logical channels to the base station by using a resource of the first UL grant; or
receiving the first UL grant, the second uplink grant UL grant, and the type of the logical channel for which the first UL grant is used from the base station; determining, based on the type of the logical channel for which the first UL grant is used, one or more target logical channels that meet the type; and sending data on the one or more determined target logical channels to the base station by using a resource of the first UL grant; or
receiving the first UL grant, the second uplink grant UL grant, and the priority of the logical channel for which the first UL grant is used from the base station; determining, based on the priority of the logical channel for which the first UL grant is used, one or more target logical channels corresponding to the priority; and sending data on the one or more determined target logical channels to the base station by using a resource of the first UL grant; or
receiving the first UL grant, the second uplink grant UL grant, and the value range of the priority of the logical channel for which the first UL grant is used from the base station; determining, based on the value range of the priority of the logical channel for which the first UL grant is used, one or more target logical channels that meet the value range of the priority; and sending data on the one or more determined target logical channels to the base station by using a resource of the first UL grant.

6. The data transmission method according to claim 4, further comprising:
receiving the first UL grant, the second uplink grant UL grant, and the latency parameter of the logical channel for which the second UL grant is used from the base station; determining, based on the latency parameter of the logical channel for which the second UL grant is used, one or more target logical channels that meet the latency parameter; and sending data on the one or more determined target logical channels to the base station by using a resource of the second UL grant; or
receiving the first UL grant, the second uplink grant UL grant, and the latency threshold of the logical channel for which the second UL grant is used from the base station; determining, based on the latency threshold of the logical channel for which the second UL grant is used, one or more target logical channels that meet the latency threshold; and sending data on the one or more determined target logical channels to the base station by using a resource of the second UL grant; or
receiving the first UL grant, the second uplink grant UL grant, and the type of the logical channel for which the second UL grant is used from the base station; determining, based on the type of the logical channel for which the second UL grant is used, one or more target logical channels corresponding to the type; and sending data on the one or more determined target logical channels to the base station by using a resource of the second UL grant; or
receiving the first UL grant, the second uplink grant UL grant, and the priority of the logical channel for which the second UL grant is used from the base station; determining, based on the priority of the logical channel for which the second UL grant is used, one or more target logical channels corresponding to the priority; and sending data on the one or more determined target logical channels to the base station by using a resource of the second UL grant; or
receiving the first UL grant, the second uplink grant UL grant, and the value range of the priority of the logical channel for which the second UL grant is used from the base station; determining, based on the value range of the priority of the logical channel for which the second UL grant is used, one or more target logical channels that meet the value range of the priority; and sending data on the one or more determined target logical channels to the base station by using a resource of the second UL grant.

7. The method according to claim 1, wherein the logical channel configuration information is carried in at least one of the first UL grant or the second UL grant.

8. The method according to claim 7, wherein
the logical channel configuration information is at least one of logical channel identification information or logical channel priority information.

9. The method according to claim 8, wherein
at least one of PRB or MCS information carried in the UL grant indicates at least one of corresponding logical channel identification information or logical channel priority information.

10. The method according to claim 8, wherein
at least one of a location or a resource of the UL grant indicates at least one of corresponding logical channel identification information or logical channel priority information.

11. The method according to claim 1, wherein the logical channel configuration information is a numerology parameter of each logical channel.

12. The method according to claim 11, wherein
the numerology parameter of the logical channel comprises a numerology index or type used for the logical channel and a TTI type used for the logical channel.

13. An electronic terminal, comprising a receiving unit, a processing unit, and a sending unit, wherein
the receiving unit is configured to receive logical channel configuration information, a first uplink grant UL grant of a first transmission time interval TTI parameter and/or a system configuration parameter numerology, and a second uplink grant UL grant of a second transmission time interval TTI parameter and/or a system configuration parameter numerology from a base station;
the processing unit is configured to determine one or more target logical channels based on the received logical channel configuration information; and
the sending unit is configured to send data on the one or more determined target logical channels to the base station.

14. The electronic terminal according to claim 13, wherein
the logical channel configuration information is at least one of the following parameter information: first parameter information of a logical channel for which the first UL grant is used or second parameter information of a logical channel for which the second UL grant is used; and
the processing unit is specifically configured to: determine, based on the first UL grant and the first parameter information of the logical channel for which the first UL grant is used from the base station, that the one or more target logical channels are one or more logical channels that meet the first parameter information; or determine, based on the second UL grant and the second parameter information of the logical channel for which the second UL grant is used from the base station, that the one or more target logical channels are one or more logical channels that meet the second parameter information.

15. The electronic terminal according to claim 14, wherein
the first parameter information of the logical channel for which the first UL grant is used is at least one of a latency parameter of the logical channel for which the first UL grant is used, a latency threshold of the logical channel for which the first UL grant is used, a type of the logical channel for which the first UL grant is used, a priority of the logical channel for which the first UL grant is used, or a value range of a priority of the logical channel for which the first UL grant is used.

16. The electronic terminal according to claim 14, wherein
the second parameter information of the logical channel for which the second UL grant is used is at least one of a latency parameter of the logical channel for which the second UL grant is used, a latency threshold of the logical channel for which the second UL grant is used, a type of the logical channel for which the second UL grant is used, a priority of the logical channel for which the second UL grant is used, or a value range of a priority of the logical channel for which the second UL grant is used.

17. The electronic terminal according to any one of claims 13 to 15, wherein
the processing unit is specifically configured to determine, based on the received latency parameter of the logical channel for which the first UL grant is used, one or more target logical channels that meet the latency parameter; and the sending unit is specifically configured to send data on the one or more determined target logical channels to the base station by using a resource of the first UL grant; or
the processing unit is specifically configured to determine, based on the received latency threshold of the logical channel for which the first UL grant is used, one or more target logical channels that meet the latency threshold; and the sending unit is specifically configured to send data on the one or more determined target logical channels to the base station by using a resource of the first UL grant; or
the processing unit is specifically configured to determine, based on the received type of the logical channel for which the first UL grant is used, one or more target logical channels that meet the type; and the sending unit is specifically configured to send data on the one or more determined target logical channels to the base station by using a resource of the first UL grant; or
the processing unit is specifically configured to determine, based on the received priority of the logical channel for which the first UL grant is used, one or more target logical channels that meet the priority; and the sending unit is specifically configured to send data on the one or more determined target logical channels to the base station by using a resource of the first UL grant; or
the processing unit is specifically configured to determine, based on the received value range of the priority of the logical channel for which the first UL grant is used, one or more target logical channels that meet the value range of the priority; and the sending unit is specifically configured to send data on the one or more determined target logical channels to the base station by using a resource of the first UL grant.

18. The electronic terminal according to any one of claims 13, 14, and 16, wherein
the processing unit is specifically configured to determine, based on the received latency parameter of the logical channel for which the second UL grant is used, one or more target logical channels that meet the latency parameter; and the sending unit is specifically configured to send data on the one or more determined target logical channels to the base station by using a resource of the second UL grant; or
the processing unit is specifically configured to determine, based on the received latency threshold of the logical channel for which the second UL grant is used, one or more target logical channels that meet the latency threshold; and the sending unit is specifically configured to send data on the one or more determined target logical channels to the base station by using a resource of the second UL grant; or
the processing unit is specifically configured to determine, based on the received type of the logical channel for which the second UL grant is used, one or more target logical channels that meet the type; and the sending unit is specifically configured to send data on the one or more determined target logical channels to the base station by using a resource of the second UL grant; or
the processing unit is specifically configured to determine, based on the received priority of the logical channel for which the second UL grant is used, one or more target logical channels that meet the priority; and the sending unit is specifically configured to send data on the one or more determined target logical channels to the base station by using a resource of the second UL grant; or
the processing unit is specifically configured to determine, based on the received value range of the priority of the logical channel for which the second UL grant is used, one or more target logical channels that meet the value range of the priority; and the sending unit is specifically configured to send data on the one or more determined target logical channels to the base station by using a resource of the second UL grant.

19. The electronic terminal according to claim 13, wherein the logical channel configuration information is carried in at least one of the first UL grant or the second UL grant.

20. The electronic terminal according to claim 19, wherein
the logical channel configuration information is at least one of logical channel identification information or logical channel priority information.

21. The electronic terminal according to claim 20, wherein
at least one of PRB or MCS information carried in the UL grant indicates at least one of corresponding logical channel identification information or logical channel priority information.

22. The electronic terminal according to claim 20, wherein
at least one of a location or a resource of the UL grant indicates at least one of corresponding logical channel identification information or logical channel priority information.

23. The electronic terminal according to claim 13, wherein the logical channel configuration information is a numerology parameter of each logical channel.

24. The electronic terminal according to claim 23, wherein
the numerology parameter of the logical channel comprises a numerology index or type used for the logical channel and a TTI type used for the logical channel.

25. An electronic terminal, comprising one or more memories and one or more processors, wherein
the memory is configured to store one or more programs; and
the processor is configured to: when executing the one or more programs stored in the memory, enable the electronic terminal to perform the method according to any one of claims 1 to 12.

26. A computer readable storage medium, comprising an instruction, wherein when the instruction is executed on an electronic terminal, the electronic terminal is enabled to perform the method according to any one of claims 1 to 12.

27. A computer program product, wherein when the computer program product is executed on an electronic terminal, the electronic terminal is enabled to perform the method according to any one of claims 1 to 12.
